(19) **Europäisches Patentamt / European Patent Office / Office européen des brevets**

(11) **EP 2 795 386 B1**

(12) **FASCICULE DE BREVET EUROPEEN**

(45) Date de publication et mention
de la délivrance du brevet:
**26.07.2017  Bulletin 2017/30**

(21) Numéro de dépôt: **12812642.2**

(22) Date de dépôt: **20.12.2012**

(51) Int Cl.:
*G02B 6/44* *(2006.01)*     *G01D 5/353* *(2006.01)*
*G01M 5/00* *(2006.01)*

(86) Numéro de dépôt international:
**PCT/EP2012/076517**

(87) Numéro de publication internationale:
**WO 2013/092933 (27.06.2013 Gazette 2013/26)**

(54) **CÂBLE OPTIQUE ADAPTE POUR MESURER UNE DÉFORMATION OU UNE TEMPÉRATURE**

OPTISCHES KABEL ZUR MESSUNG EINER DEFORMATION ODER EINER TEMPERATUR

OPTICAL CABLE ADAPTED FOR MEASURING A DEFORMATION OR A TEMPERATURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2011  FR 1162291**

(43) Date de publication de la demande:
**29.10.2014  Bulletin 2014/44**

(73) Titulaire: **ACOME, Société Coopérative et
Participative,
Société Anonyme coopérative de production
à capital variable**
**75014 Paris (FR)**

(72) Inventeurs:
• POULAIN, Arnaud
  **50540 Les Biards (FR)**
• DA ROCHA, Jean-Claude
  **14500 Vaudry (FR)**

(74) Mandataire: **Regimbeau
20, rue de Chazelles
75847 Paris Cedex 17 (FR)**

(56) Documents cités:
EP-A1- 0 733 925    EP-A2- 0 822 562
WO-A1-01/01535    FR-A1- 2 815 141
FR-A1- 2 867 561

**Description**

DOMAINE DE L'INVENTION

L'invention concerne un câble optique destiné à être utilisé pour mesurer une déformation ou une température d'une structure, et un procédé de fabrication d'un tel câble.

L'invention concerne également un procédé de mesure d'une déformation et un procédé de mesure d'une température d'une structure au moyen d'un câble optique.

ETAT DE LA TECHNIQUE

On connait du document FR 2 867 561 un dispositif de mesure sous la forme d'un câble, le câble comprenant une armature cylindrique, des fibres optiques disposées à la périphérie de l'armature cylindrique, et une enveloppe externe. Les fibres optiques sont réparties à la périphérie de l'armature à 120° degrés les unes des autres. Chaque fibre est munie de réseaux de Bragg photo-inscrits et répartis le long de la fibre à intervalles réguliers.

Le dispositif est destiné à être disposé sous une structure à surveiller, par exemple un bâtiment, et permet d'obtenir une mesure distribuée des courbures de la structure, notamment en cas de tassement de terrain.

La répartition des fibres optiques à la périphérie de l'armature cylindrique permet de mesurer des courbures indépendamment de l'état de torsion ou de traction axiale du câble, le câble étant libre de se tordre ou de subir des tractions axiales.

L'utilisation de ce dispositif nécessite toutefois de prendre en compte l'orientation angulaire ($\Psi$) des fibres tout le long du câble, afin de pouvoir déterminer l'orientation de la courbure mesurée par rapport à la structure à surveiller.

RESUME DE L'INVENTION

Un but de l'invention est de proposer un câble optique de mesure permettant une orientation constante des éléments optiques tout au long du câble par rapport à la structure à surveiller.

Ce problème est résolu dans le cadre de la présente invention grâce à un câble optique comprenant une âme optique et une gaine entourant l'âme optique, dans lequel l'âme optique est constituée d'un nombre N d'éléments optiques, N étant défini par $N = \sum_{i=1}^{n} i$, où $n \geq 2$, les éléments optiques étant agencés les uns par rapport aux autres de manière à conférer à l'âme optique une section transversale en forme générale de triangle, les éléments optiques étant maintenus en contact les uns avec les autres par la gaine, et dans lequel la gaine présente une surface externe ayant trois portions longitudinales planes s'étendant chacune le long d'un côté du triangle.

On désigne par « élément optique », une fibre optique nue (présentant typiquement un diamètre de 250 micromètres), ou une fibre optique munie d'une enveloppe en matériau thermoplastique entourant la fibre optique (présentant typiquement un diamètre externe compris entre 600 et 900 micromètres).

Le nombre N d'éléments optiques ainsi défini permet un agencement en triangle des éléments.

Comme les éléments optiques sont maintenus en contact les uns avec les autres, la précision de l'agencement des éléments optiques dépend directement de la précision du diamètre des éléments optiques. Il est ainsi possible d'obtenir un positionnement relatif très précis des éléments optiques.

Le câble peut facilement être positionné contre la structure à surveiller en ayant une portion longitudinale plane de la surface externe de la gaine maintenue contre une surface de la structure à surveiller tout au long du câble. Comme la portion longitudinale plane s'étend le long d'un côté du triangle, l'âme optique présente une orientation constante tout au long du câble.

Le câble proposé peut en particulier présenter les caractéristiques suivantes :

- le triangle est équilatéral,
- les N éléments optiques présentent des diamètres identiques,
- la distance entre les axes de deux éléments optiques formant des sommets du triangle est égale à ($n$ - 1) $\times$ $D$, où $D$ est le diamètre d'un élément optique,
- la gaine est réalisée en un matériau transparent à la lumière ambiante,
- au moins l'un des éléments optiques présente une couleur différente des autres éléments optiques,
- la gaine présente un marquage sur au moins une portion longitudinale plane.

Le câble optique peut être fabriqué selon un premier procédé de fabrication comprenant des étapes de :

- entrainer en défilement les éléments optiques en les guidant à travers un guide-fil,
- former la gaine par extrusion d'un matériau à travers une filière, autour des éléments optiques en défilement,

dans lequel, au cours de l'étape d'extrusion, une dépression est maintenue entre le matériau extrudé et les éléments optiques de manière à ce que, du fait de la dépression, le matériau vienne se plaquer contre les éléments optiques en formant les trois portions longitudinales planes.

Alternativement, le câble optique peut être fabriqué selon un deuxième procédé de fabrication comprenant des étapes de :

- entrainer en défilement les éléments optiques en les guidant à travers un guide-fil,
- former la gaine par extrusion d'un matériau à travers une filière, autour des éléments optiques en défilement,

dans lequel la filière présente une section sensiblement triangulaire de manière à former les trois portions longitudinales planes.

L'invention concerne également un procédé de mesure d'une déformation d'une structure au moyen d'un câble optique tel que défini précédemment, dans lequel le câble optique est fixé sur une surface de la structure en ayant l'une des portions longitudinales planes en contact avec la surface de la structure.

Le procédé de mesure peut comprendre des étapes de :

- pour chaque élément optique positionné à un sommet du triangle, émettre un signal optique de test pour que le signal optique de test se propage le long de l'élément optique, et mesurer un signal optique de réponse,
- analyser les spectres de fréquence des trois signaux optiques de réponse, et
- en déduire une valeur de déformation de la structure.

L'invention concerne également un procédé de mesure d'une température d'une structure au moyen d'un câble optique tel que défini précédemment, dans lequel le câble optique est fixé sur une surface de la structure en ayant l'une des portions longitudinales planes en contact avec la surface de la structure.

Le procédé de mesure peut comprendre des étapes de :

- pour au moins un élément optique, émettre un signal optique de test pour que le signal optique de test se propage le long de l'élément optique, et mesurer un signal optique de réponse,
- analyser le spectre de fréquence du signal optique de réponse, et
- en déduire une valeur de température de la structure.

PRESENTATION DES DESSINS

D'autres caractéristiques et avantages ressortiront encore de la description qui suit, laquelle est purement illustrative et non limitative et doit être lue en regard des figures annexées, parmi lesquelles :

- la figure 1 représente de manière schématique en coupe transversale une structure d'un câble optique conforme à un premier mode de réalisation dans lequel l'âme optique est constituée de trois éléments optiques,
- la figure 2 représente de manière schématique en coupe transversale une structure d'un câble optique conforme à un deuxième mode de réalisation dans lequel l'âme optique est constituée de six éléments optiques,
- la figure 3 représente de manière schématique en coupe transversale une structure d'un câble optique conforme à un troisième mode de réalisation dans lequel l'âme optique est constituée de dix éléments optiques,
- la figure 4 représente de manière schématique un premier procédé de fabrication d'un câble optique conforme à l'invention,
- la figure 5 représente de manière schématique un deuxième procédé de fabrication d'un câble optique conforme à l'invention,
- la figure 6 illustre de manière schématique une installation du câble optique en vue d'effectuer des mesures de déformation d'une structure à surveiller.

DESCRIPTION DETAILLEE

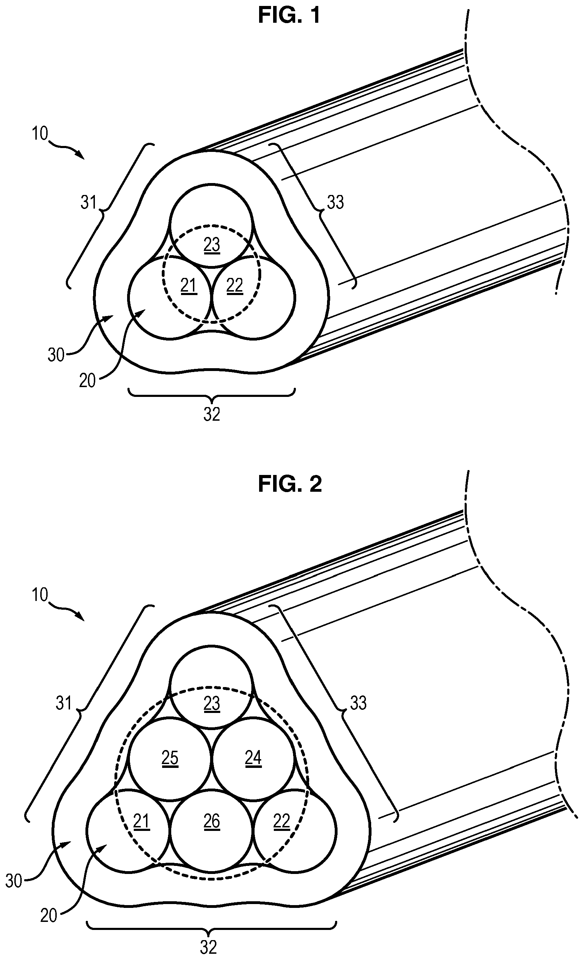

Sur la figure 1, le câble optique 10 représenté comprend une âme optique 20 et une gaine 30 entourant l'âme optique.

L'âme optique 20 est constituée de trois éléments optiques 21 à 23 de section transversale circulaire présentant des diamètres identiques. Les éléments optiques 21 à 23 sont maintenus en contact les uns avec les autres par la gaine 30. Du fait de ce maintien en contact et du nombre d'éléments optiques, les éléments optiques 21 à 23 viennent se caler les uns contre les autres et s'agencent naturellement les uns par rapport aux autres de manière à conférer à l'âme optique 20 une section transversale en forme générale de triangle.

Plus précisément, l'âme optique présente une section transversale en forme de triangulaire équilatéral, les trois éléments optiques 21 à 23 étant répartis autour de l'axe neutre du câble avec un espacement angulaire entre les éléments de 120°.

Comme les éléments optiques 21 à 23 sont de diamètres identiques et sont maintenus en contact les uns avec les autres, les distances entre les axes des éléments optiques 21-22, 22-23 et 23-21 sont identiques et égales au diamètre d'un élément optique.

Chaque élément optique est constitué d'une fibre optique nue (présentant typiquement un diamètre de 250 micromètres), ou d'une fibre optique nue et d'une enveloppe en matériau thermoplastique entourant la fibre optique (présentant typiquement un diamètre externe compris entre 600 et 900 micromètres).

La gaine 30 présente une épaisseur sensiblement constante et épouse la forme géométrique de l'âme optique 20. La gaine 30 présente en particulier une surface externe ayant trois portions longitudinales 31 à 33 sensiblement planes (ou méplats) s'étendant chacune le long d'un côté du triangle formé, chaque côté du triangle étant formé par deux éléments optiques. Les trois portions 31 à 33 sont réparties autour de l'axe neutre avec un espacement de 120°.

Sur la figure 2, le câble optique 10 représenté comprend également une âme optique 20 et une gaine 30 entourant l'âme optique.

Le câble de la figure 2 se distingue du câble de la figure 1 en ce que l'âme optique 20 est constituée de six éléments optiques 21 à 26. Les éléments optiques 21 à 26 présentent des diamètres identiques et sont agencés les uns par rapport aux autres de manière à conférer à l'âme optique 20 une section transversale en forme générale de triangle.

Les éléments optiques 21 à 26 incluent trois éléments optiques centraux 24 à 26 agencés en triangle et trois éléments optiques périphériques 21 à 23, chaque élément optique périphérique étant en contact avec deux éléments optiques centraux. Cet agencement permet de répartir les trois éléments optiques périphériques 21 à 23 les plus éloignés de l'axe neutre du câble avec un espacement angulaire entre les éléments de 120°autour de l'axe neutre du câble.

Comme les éléments optiques 21 à 26 sont de diamètres identiques et sont maintenus en contact les uns avec les autres, les distances entre les axes des éléments optiques 21-22, 22-23 et 23-21 sont identiques et égales à deux fois le diamètre d'un élément optique.

La gaine 30 présente une épaisseur constante et épouse la forme géométrique de l'âme optique 20. La gaine 30 présente en particulier une surface externe ayant trois portions longitudinales 31 à 33 sensiblement planes (ou méplats) s'étendant chacune le long d'un côté du triangle formé, chaque côté du triangle étant formé par trois éléments optiques.

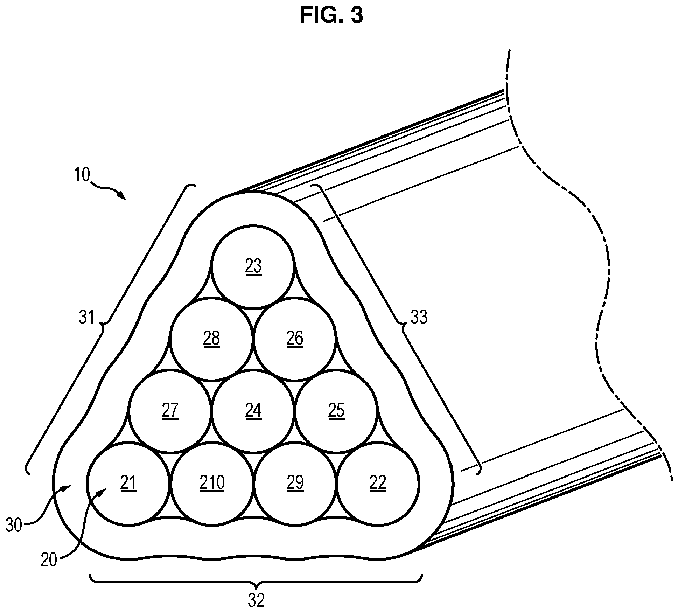

Sur la figure 3, le câble optique représenté comprend également une âme optique 20 et une gaine 30 entourant l'âme optique.

Le câble de la figure 3 se distingue des câbles des figures 1 et 2 en ce que l'âme optique 20 est constituée de dix éléments optiques 21 à 210. Les éléments optiques 21 à 210 présentent des diamètres identiques et sont agencés les uns par rapport aux autres de manière à conférer à l'âme optique 20 une section transversale en forme générale de triangle.

Les éléments optiques 21 à 210 incluent sept éléments optiques centraux 24 à 210 agencés en hexagone et trois éléments optiques périphériques 21 à 23, chaque élément optique périphérique étant en contact avec deux éléments optiques centraux. Cet agencement permet de répartir les trois éléments optiques périphériques 21 à 23 les plus éloignés de l'axe neutre du câble avec un espacement angulaire entre les éléments de 120°autour de l'axe neutre du câble.

Comme les éléments optiques 21 à 210 sont de diamètres identiques et sont maintenus en contact les uns avec les autres, les distances entre les axes des éléments optiques 21-22, 22-23 et 23-21 sont identiques et égales à trois fois le diamètre d'un élément optique.

La gaine 30 présente une épaisseur constante et épouse la forme géométrique de l'âme optique 20. La gaine 30 présente en particulier une surface externe ayant trois portions longitudinales 31 à 33 sensiblement planes (ou méplats) s'étendant chacune le long d'un côté du triangle, chaque côté du triangle étant formé par quatre éléments.

Dans chacun des modes de réalisation des figures 1 à 3, la gaine 30 est de préférence en un matériau transparent ou translucide à la lumière visible, tel que du polycarbonate par exemple, permettant ainsi à un utilisateur de distinguer les éléments optiques à l'intérieur de la gaine.

De plus, au moins l'un des éléments optiques présente une couleur différente des autres éléments optiques. Il peut s'agir par exemple de l'un des éléments optiques périphériques dont l'enveloppe présente une couleur différente de l'enveloppe des autres éléments optiques. Cela facilite le repérage visuel de l'élément optique qui est aisément visible à travers la gaine, afin de contrôler la position de l'élément optique tout au long du câble.

En outre, la gaine peut présenter un marquage sur au moins une des portions longitudinales planes. Cela permet également de contrôler le positionnement correct du câble par rapport à la structure à surveiller et de s'assurer que le câble ne subit pas de torsion.

De manière générale, l'âme optique 20 est constituée d'un nombre N d'éléments optiques, N étant défini par $N = \sum_{i=1}^{n} i$, où $n \geq 2$. De cette manière, il est possible d'agencer les éléments optiques en contact les uns avec les autres pour conférer à l'âme optique une section transversale en forme générale de triangle équilatéral. Les éléments optiques périphériques 21 à 23 les plus éloignés de l'axe neutre du câble sont constitués par les trois éléments optiques qui forment les sommets du triangle équilatéral.

Du fait de cet agencement en triangle, la structure du câble 10 proposé permet un positionnement précis des éléments optiques périphériques les uns par rapport aux autres. En particulier, la précision du positionnement radial et angulaire des éléments périphériques dépend de la précision du diamètre des éléments optiques constituant l'âme optique.

La distance entre les axes de deux éléments optiques périphériques (éléments optiques 21 à 23) est égale à $(n - 1) \times D$, où $D$ est le diamètre d'un élément optique.

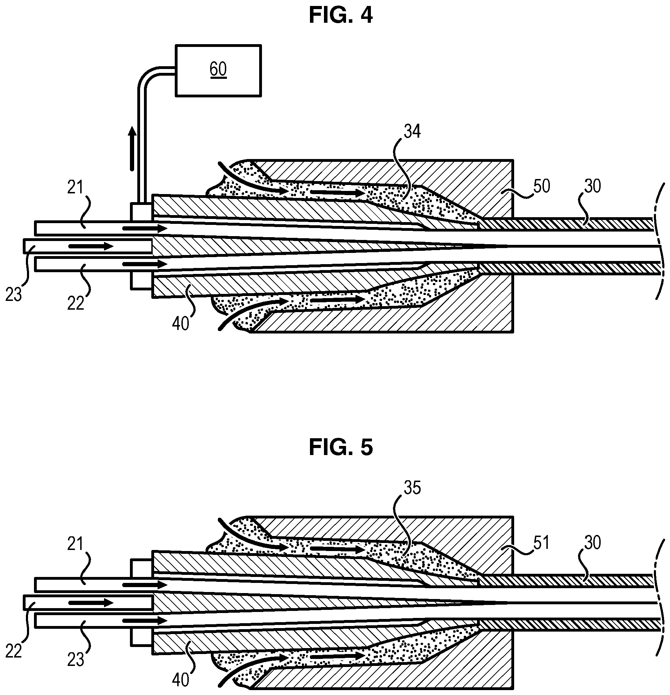

La figure 4 représente de manière schématique un premier procédé de fabrication d'un câble optique 10 conforme à l'invention.

Selon ce premier procédé de fabrication, les éléments optiques 21 à 23 sont entrainés en défilement en étant guidés à travers un guide-fil 40 permettant un pré-positionnement des éléments optiques.

La gaine 30 est formée par extrusion d'un matériau 34 de faible viscosité, tel que du polycarbonate, à travers une filière 50 de forme circulaire. Le matériau 34 est extrudé autour des éléments optiques 21 à 23 en défilement. Une dépression est maintenue entre le matériau extrudé 34 et les éléments optiques 21 à 23 grâce à une pompe à vide 60 de manière à ce que, du fait de la dépression, le matériau extrudé 34 vienne se plaquer contre les éléments optiques 21 à 23 en épousant la forme triangulaire de l'âme optique. Cela permet de maintenir les éléments optiques 21 à 23 en contact les uns avec les autres et de former une gaine 30 présentant une surface externe ayant les trois portions longitudinales planes.

Comme la gaine 30 maintient les éléments optiques en contact les uns avec les autres, les éléments optiques viennent se caler les uns contre les autres en formant naturellement une structure triangulaire.

La figure 5 représente de manière schématique un deuxième procédé de fabrication d'un câble optique conforme à l'invention.

Selon ce deuxième mode de réalisation, les éléments optiques 21 à 23 sont entrainés en défilement en étant guidés à travers un guide-fil 40 permettant un pré-positionnement des éléments optiques 21 à 23.

La gaine 30 est formée par extrusion d'un matériau 35 de forte viscosité, tel qu'un polymère sans halogène ou ZH (Zéro Halogène), à travers une filière 51 présentant une section sensiblement triangulaire. Le matériau 35 est extrudé autour des éléments optiques 21 à 23 en défilement en formant une gaine 30 présentant une surface externe ayant les trois portions longitudinales planes.

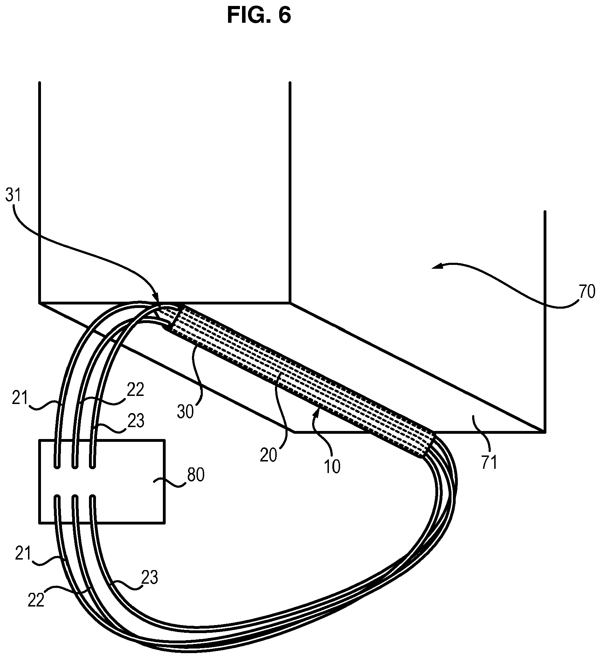

La figure 6 illustre de manière schématique une installation du câble optique 10 en vue d'effectuer des mesures de déformation d'une structure à surveiller.

Le câble 10 est fixé sur une surface 71 de la structure 70 en ayant l'une des portions longitudinales planes 31 en contact avec la surface 71 de la structure. Plus précisément, le câble 10 est fixé par collage de la portion longitudinale plane 31 sur la surface 71 de la structure 70.

Comme la même portion longitudinale plane 31 est maintenue en contact avec la surface 71 de la structure tout le long du câble 10, l'âme optique 20 présente une orientation constante tout au long du câble.

Selon un premier mode de mise en oeuvre, une déformation de la structure 70 le long du câble optique 10 est mesurée de la manière suivante.

Chaque élément optique 21 à 23 périphérique est raccordé à un appareil d'analyse 80.

L'appareil d'analyse 80 est apte à générer un signal optique de pompage (signal pulsé) qui est appliqué à une première extrémité de chaque élément optique et un signal optique de test (signal continu) qui est appliqué à une deuxième extrémité de chaque élément optique et qui se propage en sens opposé.

Lorsque l'écart entre la fréquence du signal de test et la fréquence du signal de pompage est égal au décalage Brillouin du câble optique, le signal de test est amplifié par interaction avec le signal de pompage.

De plus, le décalage Brillouin du câble optique 10 varie avec la contrainte appliquée à l'élément optique et avec la température de l'élément optique.

En faisant varier la fréquence du signal de test et en mesurant l'intensité du signal de test amplifié, l'appareil d'analyse 80 permet de détecter le décalage Brillouin du câble optique en une pluralité de points le long de chaque élément optique.

L'appareil d'analyse 80 mesure trois signaux optiques de réponse, chaque signal optique ayant été généré par l'un des éléments optiques 21 à 23 périphériques.

La sensibilité à l'allongement d'un élément optique - rapport entre l'allongement imposé (en pourcentage) et la variation du décalage Brillouin qui en résulte - étant connue, il est possible de déduire, en chaque point le long du câble 10, une valeur d'allongement de chaque élément optique périphérique 21 à 23.

La déformation du câble en un point donné est calculée de manière connue comme une combinaison des valeurs d'allongements des trois éléments optiques périphériques 21 à 23 en ce point, sachant que ces éléments optiques sont disposés à 120° et que les dimensions du câble 10 sont définies.

Comme le câble 10 est intimement lié à la structure 70 dont on cherche à mesurer les déformations, les déformations mesurées sont considérées comme étant les déformations de la structure 70.

Selon un deuxième mode de mise en oeuvre, une déformation de la structure le long du câble optique est mesurée de la manière suivante.

Chaque élément optique 21 à 23 périphérique est muni d'une série de réseaux de Bragg photo-inscrits dans l'élément optique. Les réseaux de Bragg sont positionnés le long de l'élément optique en une pluralité de points, à intervalles réguliers. Chaque réseau de Bragg est formé par une variation de l'indice de réfraction du coeur de l'élément optique perpendiculairement à l'axe de l'élément optique. Les réseaux de Bragg formés le long de l'élément optique présentent une périodicité différente.

Les éléments optiques périphériques 21 à 23 sont raccordés à un appareil d'analyse apte à générer un signal optique d'excitation. Une partie du signal optique d'excitation est réfléchie par le réseau de Bragg, dans une bande de fréquence dont la fréquence centrale - correspondant à la longueur d'onde de Bragg - dépend de la périodicité du réseau.

Les déformations imposées à l'élément optique allongent ou raccourcissent le réseau, ce qui induit une variation de périodicité et par conséquent une variation de la longueur d'onde de Bragg.

L'appareil d'analyse est apte à mesurer un signal optique de réponse rétrodiffusé caractérisé par une fréquence centrale qui dépend notamment de l'allongement de l'élément optique.

Le rapport entre la fréquence centrale et l'allongement de l'élément optique étant connu, il est possible de déduire, en chaque point le long du câble muni d'un réseau de Bragg, une valeur d'allongement de chaque élément optique périphérique.

Ici encore, la déformation du câble en un point donné muni de réseaux de Bragg est calculée de manière connue comme une combinaison des valeurs d'allongements des trois éléments optiques périphériques 21 à 23 en ce point, sachant que ces éléments optiques sont disposés à 120° et que les dimensions du câble 10 sont définies.

Selon un troisième mode de mise en oeuvre, une déformation de la structure 70 le long du câble optique 10 est mesurée de la manière suivante.

Chaque élément optique 21 à 23 périphérique est raccordé à un appareil d'analyse 80 de type OFDR (Optical Frequency Domain Reflectometry).

L'appareil d'analyse 80 est apte à générer un signal optique d'excitation qui est appliqué à une extrémité de chaque élément optique. Le signal optique d'excitation est modulé linéairement et périodiquement en fréquence. Une partie du signal optique est rétrodiffusé par l'élément optique.

L'appareil d'analyse 80 mesure trois signaux optiques de réponse, chaque signal optique ayant été généré par l'un des éléments optiques 21 à 23 périphériques.

Une déformation d'un élément optique provoque des changements locaux de l'indice de réfraction de l'élément optique, et par conséquent une modification des caractéristiques du signal rétrodiffusé. L'appareil d'analyse mesure le spectre de puissance issu des mélanges du signal rétrodiffusé par l'élément optique et celui de l'oscillateur local de l'appareil. Une transformée de Fourier, permettant de passer du domaine fréquentiel au domaine temporel, est réalisée sur le signal récupéré. Toute sollicitation sur l'élément optique et modifiant l'indice de réfraction a un impact direct sur le spectre de rétrodiffusion. La mesure du décalage en fréquence du signal spectral acquis à l'origine (référence) et celui déterminé à l'instant t, permet de déterminer et de quantifier la sollicitation sur l'élément optique.

La déformation du câble en un point est calculée de manière connue comme une combinaison des valeurs d'allongements des trois éléments optiques périphériques 21 à 23 en ce point, sachant que ces éléments optiques sont disposés à 120° et que les dimensions du câble 10 sont définies.

Le câble optique 10 peut également être utilisé pour mesurer une température de la structure 70.

A cet effet, le câble 10 est fixé sur la surface 71 de la même manière que sur la figure 6.

La température de la structure le long du câble optique 70 est mesurée de la manière suivante.

L'un des éléments optiques 21 à 210 est raccordé à un appareil d'analyse.

L'appareil d'analyse est apte à générer un signal optique d'excitation monochromatique qui est appliqué à une extrémité de l'élément optique. Une partie du signal optique est réfléchie par l'élément optique.

L'appareil d'analyse est apte à mesurer un signal optique de réponse rétrodiffusé par l'élément optique, ayant subi un décalage fréquentiel par diffusion inélastique de type Raman.

La température du câble est calculée en fonction du spectre de fréquence du signal optique de réponse.

Le spectre du signal optique de réponse est caractérisé par deux pics distincts : un pic Stockes et un pic anti-Stockes. La différence entre une valeur d'intensité du pic anti-Stokes mesurée et une valeur de référence (correspondant à l'intensité du pic anti-Stokes à une température de référence) dépend de la température de l'élément optique.

De même, le rapport de l'intensité du pic anti-Stokes sur l'intensité du pic Stockes dépend de la température de l'élément optique. La sensibilité de ce rapport est typiquement de 0,8 % par degrés Celsius.

L'analyse dans le temps du signal de réponse permet de déterminer une température en un point quelconque le long de l'élément optique.

Comme le câble 10 est intimement lié à la structure 70 dont on cherche à mesurer la température, la température mesurée est considérée comme étant la température de la structure 70.

## Revendications

1. Câble optique (10) comprenant une âme optique (20) et une gaine (30) entourant l'âme optique (20), dans lequel l'âme optique (20) est constituée d'un nombre N d'éléments optiques (21-23), N étant défini par $N = \sum_{i=1}^{n} i$, où $n \geq 2$, chaque élément optique (21-23) étant une fibre optique nue ou une fibre optique munie d'une enveloppe en matériau thermoplastique entourant la fibre optique, **caractérisé en ce que** les éléments optiques (21-23) sont agencés les uns par rapport aux autres de manière à conférer à l'âme optique (20) une section transversale en forme générale de triangle, les éléments optiques (21-23) étant maintenus en contact les uns avec les autres par la gaine (30), et **en ce que** la gaine (30) présente une surface externe ayant trois portions longitudinales planes (31-33) s'étendant chacune le long d'un côté du triangle.

2. Câble selon la revendication 1, dans lequel le triangle est équilatéral.

3. Câble optique selon l'une des revendications 1 ou 2, dans lequel les N éléments optiques (21-23) présentent des diamètres identiques.

4. Câble optique selon l'a revendication 3, dans lequel la distance entre les axes de deux éléments optiques formant des sommets du triangle est égale à $(n - 1) \times D$, où $D$ est le diamètre d'un élément optique.

**5.** Câble selon l'une des revendications qui précèdent, dans lequel la gaine (30) est réalisée en un matériau transparent à la lumière visible.

**6.** Câble selon la revendication 5, dans lequel au moins l'un des éléments optiques présente une couleur différente des autres éléments optiques.

**7.** Câble selon l'une des revendications qui précèdent, dans lequel la gaine (30) présente un marquage sur au moins une portion longitudinale plane.

**8.** Procédé de fabrication d'un câble optique conforme à l'une des revendications 1 à 7, comprenant des étapes de :

- entrainer en défilement les éléments optiques (21-23) en les guidant à travers un guide-fil (40),
- former la gaine (30) par extrusion d'un matériau (34) à travers une filière (50), autour des éléments optiques (21-23) en défilement,

dans lequel, au cours de l'étape d'extrusion, une dépression est maintenue entre le matériau extrudé (34) et les éléments optiques (21-23) de manière à ce que, du fait de la dépression, le matériau vienne se plaquer contre les éléments optiques (21-23) en formant les trois portions longitudinales planes (31-33).

**9.** Procédé de fabrication d'un câble optique conforme à l'une des revendications 1 à 7, comprenant des étapes de :

- entrainer en défilement les éléments optiques (21-23) en les guidant à travers un guide-fil (40),
- former la gaine (30) par extrusion d'un matériau (35) à travers une filière (51), autour des éléments optiques (21-23) en défilement,

dans lequel la filière (51) présente une section sensiblement triangulaire de manière à former les trois portions longitudinales planes (31-33).

**10.** Procédé de mesure d'une déformation d'une structure (70) au moyen d'un câble (10) conforme à l'une des revendications 1 à 7, dans lequel le câble (10) est fixé sur une surface (71) de la structure (70) en ayant l'une des portions longitudinales planes (31) en contact avec la surface (71) de la structure.

**11.** Procédé selon la revendication 10, comprenant des étapes de :

- pour chaque élément optique (21-23) positionné à un sommet du triangle, émettre un signal optique de test pour que le signal optique de test se propage le long de l'élément optique, et mesurer un signal optique de réponse,
- analyser les spectres de fréquence des trois signaux optiques de réponse, et
- en déduire une valeur de déformation de la structure (70).

**12.** Procédé de mesure d'une température d'une structure (70) au moyen d'un câble (10) conforme à l'une des revendications 1 à 7, dans lequel le câble (10) est fixé sur une surface (71) de la structure (70) en ayant l'une des portions longitudinales planes (31) en contact avec la surface (71) de la structure.

**13.** Procédé selon la revendication 12, comprenant des étapes de :

- pour au moins un élément optique (21-210), émettre un signal optique de test pour que le signal optique de test se propage le long de l'élément optique, et mesurer un signal optique de réponse,
- analyser le spectre de fréquence du signal optique de réponse, et
- en déduire une valeur de température de la structure (70).

**Patentansprüche**

**1.** Lichtleitkabel (10), umfassend einen optischen Kern (20) und einen Mantel (30), der den optischen Kern (20) umgibt, wobei der optische Kern (20) aus einer Anzahl N von optischen Elementen (21 bis 23) besteht, wobei N durch $N = \sum_{i=1}^{n} i$ definiert ist, wobei $n \leq 2$, wobei jedes optische Element (21 bis 23) eine blanke Lichtleitfaser oder eine Lichtleitfaser, die mit einem Mantel aus einem thermoplastischen Material versehen ist, der die Lichtleitfaser umgibt, ist, **dadurch gekennzeichnet, dass** die optischen Elemente (21 bis 23) im Verhältnis zueinander derart angeordnet sind, dass sie dem optischen Kern (20) einen im Allgemeinen dreieckigen Querschnitt verleihen, wobei die optischen Elemente (21 bis 23) durch den Mantel (30) in Kontakt miteinander gehalten werden, und dass der Mantel eine externe Oberfläche aufweist, die drei ebene Längsabschnitte (31 bis 33) aufweist, die sich jeweils an einer Seite des Dreiecks entlang erstrecken.

**2.** Kabel nach Anspruch 1, wobei das Dreieck gleichseitig ist.

**3.** Lichtleitkabel nach einem der Ansprüche 1 oder 2, wobei die N optischen Elemente (21 bis 23) identische Durchmesser aufweisen.

**4.** Lichtleitkabel nach Anspruch 3, wobei der Abstand zwischen den Achsen von zwei optischen Elementen, die Spitzen des Dreiecks bilden, gleich ($n$-1)$\times D$ ist, wobei $D$ der Durchmesser eines optischen Elements ist.

5. Kabel nach einem der vorhergehenden Ansprüche, wobei der Mantel (30) aus einem für sichtbares Licht durchsichtigem Material ausgebildet ist.

6. Kabel nach Anspruch 5, wobei mindestens eines der optischen Elemente eine andere Farbe als die anderen optischen Elemente aufweist.

7. Kabel nach einem der vorhergehenden Ansprüche, wobei der Mantel (30) eine Markierung auf mindestens einem ebenen Längsabschnitt aufweist.

8. Verfahren zum Herstellen eines optischen Kabels nach einem der Ansprüche 1 bis 7, umfassend folgende Schritte:

   - laufendes Mitnehmen der optischen Elemente (21 bis 23), indem sie durch eine Drahtführung (40) hindurch geführt werden,
   - Bilden des Mantels (30) durch durchlaufendes Strangpressen eines Materials (34) durch ein Mundstück (50) hindurch um die optischen Elemente (21 bis 23) herum,

   wobei im Verlauf des Strangpressschritts ein Unterdruck zwischen dem stranggepressten Material (34) und den optischen Elementen (21 bis 23) gehalten wird, so dass das Material durch den Unterdruck auf die optischen Elemente (21 bis 23) gedrückt wird und die drei ebenen Längsabschnitte (31 bis 33) bildet.

9. Verfahren zum Herstellen eines optischen Kabels nach einem der Ansprüche 1 bis 7, umfassend folgende Schritte:

   - laufendes Mitnehmen der optischen Elemente (21 bis 23), indem sie durch eine Drahtführung (40) hindurch geführt werden,
   - Bilden des Mantels (30) durch laufendes Strangpressen eines Materials (35) durch ein Mundstück (51) hindurch um die optischen Elemente (21 bis 23) herum,

   wobei das Mundstück (51) einen im Wesentlichen dreieckigen Querschnitt aufweist, um die drei ebenen Längsabschnitte (31 bis 33) zu bilden.

10. Verfahren zum Messen einer Verformung einer Struktur (70) mittels eines Kabels (10) nach einem der Ansprüche 1 bis 7, wobei das Kabel (10) an einer Oberfläche (71) der Struktur (70) befestigt ist, indem einer der ebenen Längsabschnitte (31) in Kontakt mit der Oberfläche (71) der Struktur steht.

11. Verfahren nach Anspruch 10, umfassend folgende Schritte:

    - für jedes optische Element (21 bis 23), das an einer Spitze des Dreiecks positioniert ist, Emittieren eines optischen Testsignals, damit sich das optische Testsignal an dem optischen Element entlang ausbreitet, und Messen eines optischen Antwortsignals,
    - Analysieren der Frequenzspektren der drei optischen Antwortsignale, und
    - daraus Ableiten eines Verformungswertes der Struktur (70).

12. Verfahren zum Messen einer Temperatur einer Struktur (70) mittels eines Kabels (10) nach einem der Ansprüche 1 bis 7, wobei das Kabel (10) an einer Oberfläche (71) der Struktur (70) befestigt ist, indem einer der ebenen Längsabschnitte (31) in Kontakt mit der Oberfläche (71) der Struktur steht.

13. Verfahren nach Anspruch 12, umfassend folgende Schritte:

    - für mindestens ein optisches Element (21 bis 210), Emittieren eines optischen Testsignals, damit sich das optische Testsignal an dem optischen Element entlang ausbreitet, und Messen eines optischen Antwortsignals,
    - Analysieren des Frequenzspektrums des optischen Antwortsignals, und
    - daraus Ableiten eines Temperaturwertes der Struktur (70).

**Claims**

1. An optical cable (10) comprising an optical core (20) and a sheath (30) surrounding the optical core (20), wherein the optical core (20) consists of a number N of optical elements (21-23), N being defined by

$$N = \sum_{i=1}^{n} i$$ wherein n $\geq$ 2, each optical element (21-23) being a naked optical fiber or an optical fiber provided with a skin in a thermoplastic material surrounding the optical fiber, **characterized in that** the optical elements (21-23) are arranged relatively to each other, so as to give the optical core (20) a cross-section with the general shape of a triangle, the optical elements (21-23) being maintained in contact with each other through the sheath (30), and **in that** the sheath (30) has an external surface having three planar longitudinal portions (31-33) each extending along one side of the triangle.

**2.** The cable according to claim 1, wherein the triangle is an equilateral triangle.

**3.** The optical cable according to one of claims 1 or 2, wherein the N optical elements (21-23) have identical diameters.

**4.** The optical cable according to claim 3, wherein the distance between the axes of two optical elements forming the apices of the triangle is equal to $(n\text{-}1){\times}D,$ wherein D is the diameter of an optical element.

**5.** The cable according to one of the preceding claims, wherein the sheath (30) is made in a material transparent to visible light.

**6.** The cable according to claim 5, wherein at least one of the optical elements has a different color from the other optical elements.

**7.** The cable according to one of the preceding claims, wherein the sheath (30) has a marking on at least one planar longitudinal portion.

**8.** The method for manufacturing an optical cable according to one of claims 1 to 7, comprising the steps of:

- running the optical elements (21-23) by guiding them through a wire-guide (40),
- forming the sheath (30) by extrusion of a material (34) through a die (50), around the running optical elements (21-23),

wherein, during the extrusion step, a depression is maintained between the extruded material (34) and the optical elements (21, 23) so that because of the depression, the material will flatten against the optical elements (21, 23) thus forming the three planar longitudinal portions (31-33).

**9.** The method for manufacturing an optical cable according to one of claims 1 to 7, comprising the steps of:

- running the optical elements (21-23) by guiding them through a wire-guide (40),
- forming the sheath (30) by extrusion of a material (35) through a die (51), around the running optical elements (21-23),

wherein the die (51) has a substantially triangular section so as to form the three planar longitudinal portions (31-33).

**10.** A method for measuring a deformation of a structure (70) by means of a cable (10) according to one of claims 1 to 7, wherein the cable (10) is attached on a surface (71) of the structure (70) while having one of the planar longitudinal portions (31) in contact with the surface (71) of the structure.

**11.** The method according to claim 10, comprising the steps of:

- for each optical element (21, 23) positioned at an apex of the triangle, emitting an optical test signal so that the optical test signal propagates along the optical element, and measuring an optical response signal,
- analyzing the frequency spectra of the three optical response signals, and
- inferring therefrom a deformation value of the structure (70).

**12.** A method for measuring a temperature of a structure (70) by means of a cable (10) according to one of claims 1 to 7, wherein the cable (10) is attached on a surface (71) of the structure (70) while having one of the planar longitudinal portions (31) in contact with the surface (71) of the structure.

**13.** The method according to claim 12, comprising the steps of:

- for at least one optical element (21-210), emitting an optical test signal so that the optical test signal propagates along the optical elements, and measuring an optical response signal,
- analyzing the frequency spectrum of the optical response signal, and
- inferring therefrom a temperature value of the structure (70).

## FIG. 1

## FIG. 2

EP 2 795 386 B1

FIG. 3

# FIG. 4

# FIG. 5

# FIG. 6

**EP 2 795 386 B1**

**RÉFÉRENCES CITÉES DANS LA DESCRIPTION**

**Documents brevets cités dans la description**

- FR 2867561